# EUROPÄISCHE PATENTSCHRIFT

(11) **EP 0 283 832 B1**
(45) Veröffentlichungstag und Bekanntmachung des Hinweises auf die Patenterteilung: **01.12.1993**
(21) Anmeldenummer: 88103579.4
(22) Anmeldetag: 08.03.1988
(51) Int. Cl.: F04B 13/00, F04B 23/06, G01F 11/02

(54) **Vorrichtung zum Entnehmen und genauen Dosieren von Medien**
Device for taking out and precisely dispensing fluid media
Dispositif pour le prélèvement et le dosage précis de milieux fluides

(30) Priorität: 27.03.1987 DE 3710172
(43) Veröffentlichungstag der Anmeldung: 28.09.1988
(73) Patentinhaber: Hilger u. Kern GmbH, D-68167 Mannheim (DE)
(72) Erfinder: Blochmann, Horst, D-6704 Mutterstadt (DE)
(74) Vertreter: Fischer, Wolf-Dieter, Dipl.-Ing.

(56) Entgegenhaltungen:
- FR-A- 2 493 418
- US-A- 2 348 151

## Beschreibung

Die Erfindung betrifft eine Vorrichtung zum Entnehmen und genauen Dosieren von mittel- und hochviskosen Medien aus Gebinden und Fässern mit einer am Behältnis angebrachten Folgeplatte, an der eine Hebeeinrichtung angeordnet ist, daß an der Folgeplatte ein Pumpengehäuse einer Schöpfkolbenpumpe angebracht ist, dessen mit einem hydraulischen oder pneumatischen Antrieb versehener Schöpfkolben in das Behältnis reicht und daß seitlich an der Zylinderkammer der Pumpe ein Einlaßventil angeordnet ist.

Zum Fördern und Entnehmen von Thixotropen und hochviskosen Medien aus Gebinden und Fässern verwendet man Schöpfkolbenpumpen, die sich in Verbindung mit derartigen Medien besonders bewährt haben. Als ein- und zweikomponentige Medien werden insbesondere Polyurethan, Silikonkautschuk oder Epoxydharz gefördert. Derartige Vorrichtungen werden aber auch für Fette und Dichtungsmaterialien aller Art eingesetzt. Die bekannten Schöpfkolbenpumpen werden mit ihrer Folgeplatte auf das Behältnis aufgesetzt und zwar derart, daß die Folgeplatte unter einem bestimmten Druck an der Oberfläche der Materialien anliegt. Durch Betätigen des Schöpfkolbens wird das Material über eine erste Zylinderkammer durch den Schöpfkolben gedrückt und gelangt von dort über eine seitliche Kugelventileinheit in eine weitere Zylinderkammer. Der als Differentialkolben ausgebildete Kolben bewirkt, daß im oberen Zylinder das Medium verdrängt bzw. gefördert wird. Beim Abwärtshub schließt die untere Ventileinheit, wobei der Differentialkolben das Medium im unteren Zylinder verdrängt und dabei öffnet die innere Ventileinheit und das Volumen im unteren Zylinder wird ebenfalls verdrängt. 50 % des Volumens wird gefördert und 50 % füllen den oberen Zylinder. Dies bedeutet, daß im Auf- und Abwärtshub gefördert wird. Da die Schließzeit der unteren Ventileinheit und die Zylinderfüllung von der Viskosität der Medien und der Fördergeschwindigkeit abhängig ist, sind diese Pumpen nur zum Fördern und nicht zum genauen Dosieren geeignet. Will man das aus den Behältnissen entnommene Medium dosieren, dann werden in Verbindung mit derartigen Schöpfkolbenpumpen noch zusätzliche Dosiereinheiten gebraucht. Wegen der Eigenschaften der zu verarbeitenden Materialien und auch der Entnahme aus Behältern, wobei die häufigsten Behälter 20 Liter-Gebinde und 200 Liter-Fässer sind, bauen diese Gerätschaften sehr groß, so daß auch ein sehr großer Platzbedarf für die Anlage gebraucht wird. Sowohl die Schöpfkolbenpumpe als auch das Dosiersystem bringen einen beachtlichen apparatetechnischen Aufwand, indem zunächst für das Dosiersystem gesonderte Fütterpumpen gebraucht werden und damit ein zusätzlicher Kostenaufwand und Instandhaltungsaufwand erforderlich ist. Da eine größere Anzahl von Teilen und Apparaten innerhalb der Anlage arbeiten, besteht auch eine höhere Ausfallgefahr und damit auch größere Stillstandzeiten. Der wesentliche Nachteil des gesamten Systems besteht somit darin, daß das Fördern und Dosieren in getrennten Apparaten vorgenommen wird.

Bekannt ist eine Vorrichtung, mit der Material dosiert wird (FR-A-2 493 418), wobei an eine entsprechende Öffnung eine Zuführungsvorrichtung angebracht wird. Was die Materialförderung angeht, so erfolgt diese durch die Sogwirkung infolge der Bewegung des Kolbens oder unter Schwerkrafteinwirkung durch Ausnutzung der räumlichen Anordnung des Vorratsbehälters. Beide Möglichkeiten stoßen jedoch bei Medien mit relativ niedriger Viskosität an ihre Grenzen. Gegenstand dieser Druckschrift ist somit das Verteilen und Aufbringen von Kleber-Material in einer definierten Menge auf zylindrische Körper mit unterschiedlichen Durchmessern.

Bekannt ist weiterhin eine Vorrichtung zum Fördern von mittel- bis hochviskosen Materialien aus Gebinden und Fässern (US-A-2 348 151), die jedoch ein Dosieren des Materials nicht zuläßt. Es geht hierbei darum, ein unkontrolliertes Herausspritzen von Material beim Öffnen der Vergußdüse zu Beginn des Arbeitsprozesses infolge der Kontraktion des elastischen Schlauchmaterials sowie einen kontinuierlichen und gleichmäßigen Materialfluß während des Verarbeitungsprozesses zu gewährleisten. Ersteres wird dadurch erreicht, daß beim Schließen der Vergußdüse die Druckbeaufschlagung vom Material genommen wird. Letzteres wird durch den Einsatz zweier jeweils räumlich getrennt angeordneter Luftmotoren und einfach wirkender Pumpen erreicht. Ein genaues Dosieren des Materials ist nicht vorgesehen. Der Förderdruck der Materialien kann nur über die Einstellung des Luftdrucks für die Luftmotoren geregelt werden.

Der Erfindung liegt die Aufgabe zugrunde, eine Vorrichtung der eingangs genannten Art so auszubilden, daß sowohl das Fördern als auch genaues Dosieren mit einer einzigen Vorrichtung vorgenommen werden kann.

Diese Aufgabe wird nach der Erfindung dadurch gelöst, daß das Einlaßventil mit einer weiteren, mit einem Auslaß versehenen Zylinderkammer verbunden ist, daß die weitere Zylinderkammer mit Förderkolben als Dosierkammer vorgesehen ist und am Einlaß sowie Auslaß zwangsgesteuerte Ventile angeordnet sind und daß in der Dosierkammer eine Druckmessung vorgesehen ist, um reproduzierbare Startbedingungen zu erhalten.

Eine vorteilhafte Ausführungsform sieht vor, daß der Druckaufnehmer nahe dem Auslaß in der Dosierkammer angeordnet ist.

Weiterhin ist es vorteilhaft, daß der Förderkolben mit einem Weg-Meßsystem versehen ist.

Es wird weiterhin vorgeschlagen, daß der Förderkolben mit Sperrflüssigkeitsvorlagen versehen ist.

Schließlich geht man so vor, daß zwischen der Folgeplatte und dem Behältnis eine weitere Sperrflüssigkeitsvorlage angebracht ist.

Die Erfindung bringt den Vorteil, daß für das Fördern und Dosieren derartiger Medien aus Fässern und Gebinden eine einzige mit hoher Dosiergenauigkeit arbeitende Vorrichtung zur Verfügung steht, wodurch der apparatetechnische Aufwand erheblich verringert werden kann.

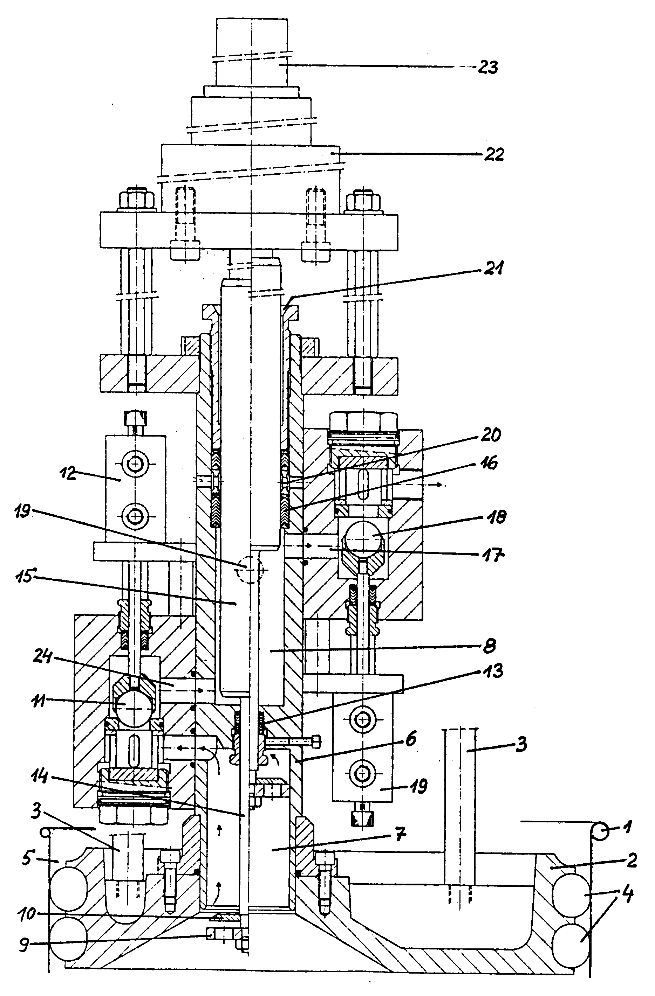

Die Erfindung wird in der nachfolgenden Beschreibung anhand eines in der Zeichnung dargestellten Ausführungsbeispiels näher erläutert.

In der Zeichnung ist eine Ausführungsform der erfindungsgemäßen Vorrichtung in einem Längsschnitt dargestellt, wobei in der durch die Mittellinie geteilten linken Hälfte der Kolben in der unteren Stellung und in der rechten Hälfte der Kolben in der oberen Stellung gezeigt ist.

Auf ein Behältnis 1 ist eine Folgeplatte 2 mit Druck aufgesetzt, wobei dafür eine Hebeeinrichtung vorgesehen ist, die über die Säulen 3 mit der Folgeplatte 2 verbunden ist. Die Folgeplatte 2 ist an Dichtungen 4 abgedichtet, wobei weiterhin in dem Spalt 5 zwischen der Platte 2 und dem Behältnis 1 eine Sperrflüssigkeitsvorlage vorgesehen ist.

An der Folgeplatte 2 ist ein Gehäuse 6 befestigt, das eine untere erste Zylinderkammer 7 und eine weitere obere Zylinderkammer 8 aufweist. In der ersten Zylinderkammer 7 ist verschiebbar ein Schöpfkolben 9 angeordnet, der mit einer abhebbaren Ventilplatte 10 versehen ist. Seitlich zum Gehäuse 6 ist ein Einlaßventil 11 befestigt, das die beiden Zylinderkammern 7,8 miteinander verbindet. Das Ventil 11 ist mit einem gesonderten Antrieb 12 versehen. Zwischen den beiden Kammern 7, 8 ist die Kolbenstange 14 des Schöpfkolbens 9 mit einer Dichtung 13 abgedichtet.

In der weiteren Zylinderkammer 8, die als Dosierkammer vorgesehen ist, ist ein Förderkolben 15 als Verlängerung der Kolbenstange 14 angeordnet, wobei die Dosierkammer 8 mit Hilfe weiterer Dichtungen 16 abgedichtet ist. Der Auslaß 17 der Dosierkammer 8 befindet sich am oberen Ende der Kammer und steht in Verbindung mit einem Auslaßventil 18. Das Auslaßventil 18 ist mit einem gesonderten Antrieb 19 versehen. Beide Ventile 11, 18 sind somit zwangsgesteuert. Nahe dem Auslaß 17 ist in der Dosierkammer 8 ein Druckaufnehmer 19 vorgesehen.

Weiterhin sind zur Abdichtung des Kolbens 15 Sperrflüssigkeitsvorlagen 20 und 21 angeordnet, was insbesondere bei feuchtigkeitsempfindlichen Medien von Bedeutung ist. Für den Antrieb des Kolbens 8 dient ein Hydraulikzylinder 22 und zum Messen des Volumens ist dieser Antrieb mit einem Weg-Meßsystem 23 versehen.

Die Folgeplatte 2 wird mit entsprechendem Druck auf die Oberfläche des in dem Behältnis 1 angeordneten Mediums gedrückt, wobei der Schöpfkolben 9 beim Aufwärtshub Medium über das hydraulische oder pneumatische zwangsgesteuerte Einlaßventil 11 in die Dosierkammer 8 fördert. Bei gefüllter Dosierkammer 8 schließt das Einlaßventil 11 und der Hydraulikzylinder 22 komprimiert über den Förderkolben 15 das Medium auf den erforderlichen Förderdruck. Der Förderdruck wird über den elektronischen Druckaufnehmer 19 gemessen. Bei erreichtem Förderdruck kommt der Hydraulikantrieb 22 zum Stillstand.

Bei kontinuierlichem Ausstoß des Kolbenvolumens öffnet das Auslaßventil 18 und der Hydraulik-Zylinder 22 dosiert über den Förderkolben 15 das vorgegebene Volumen aus (gemessen über das Weg-Meßsystem 23). Bei entleerter Dosierkammer 8 schließt das Auslaßventil 18, wobei zugleich das Einlaßventil 11 öffnet und die Dosierkammer 8 wird erneut gefüllt.

Bei pulsationsfreier Förderung sind zwei derartige Vorrichtungen notwendig, die gegenläufig arbeiten. Während eine derartige Vorrichtung fördert, füllt die zweite und komprimiert das eingepreßte Medium auf den erfoderlichen Arbeitsdruck. Ist das Volumen der ersten Vorrichtung ausgestoßen, übernimmt die zweite Vorrichtung bei gleichem Förderdruck die Förderung und die erste Vorrichtung wird erneut gefüllt. Dieses wechselweise Fördern erlaubt einen pulsationsfreien, kontinuierlichen Ausstoß.

Zur Verarbeitung von zwei- oder mehrkomponentigen Medien wird bei Schußbetrieb pro Komponente eine derartige Vorrichtung gebraucht. Bei pulsationsfreier, kontinuierlicher Förderung sind je Komponente zwei derartige Vorrichtungen erforderlich.

Die Vorrichtung kann auch für niederviskose Materialien verwendet werden, wobei die Folgeplatte 2 durch einen am Zylinder anzubringenden Adapter ausgetauscht wird und dann mit einem normalen Drucktank die Befüllung über die Zylinderkammer vorgenommen werden kann.

## Patentansprüche

1. Vorrichtung zum Entnehmen und genauen Dosieren von mittel- und hochviskosen Medien aus Gebinden und Fässern mit einer am Behältnis (1) angebrachten Folgeplatte (2), an der eine Hebeeinrichtung angeordnet ist, daß an der Folgeplatte (2) ein Pumpengehäuse (6) einer Schöpfkolbenpumpe angebracht ist, dessen mit einem hydraulischen oder pneumatischen Antrieb versehener Schöpfkolben (9) in das Behältnis (1) reicht, und daß seitlich an der Zylinderkammer (7) der Pumpe ein Einlaßventil (11) angeordnet ist, dadurch gekennzeichnet, daß das Einlaßventil (11) mit einer weiteren, mit einem Auslaß (17) versehenen Zylinderkammer (8) verbunden ist, daß die weitere Zylinderkammer (8) mit Förderkolben (15) als Dosierkammer vorgesehen ist und am Einlaß (24) sowie Auslaß (17) zwangsgesteuerte Ventile (11, 18) angeordnet sind und daß in der Dosierkammer (8) eine Druckmessung vorgesehen ist, um reproduzierbare Startbedingungen zu erhalten.

2. Vorrichtung nach Anspruch 1, dadurch gekennzeichnet, daß der Druckaufnehmer (19) nahe dem Auslaß (17) in der Dosierkammer (8) angeordnet ist.

3. Vorrichtung nach Anspruch 1 und 2, dadurch gekennzeichnet, daß der Förderkolben (15) mit einem WegMeßsystem (23) versehen ist.

4. Vorrichtung nach Anspruch 1 bis 3, dadurch gekennzeichnet, daß der Förderkolben (15) mit Sperrflüssigkeitsvorlagen (20, 21) versehen ist.

5. Vorrichtung nach Anspruch 1 bis 4, dadurch gekennzeichnet, daß zwischen der Folgeplatte (2) und dem Behältnis (1) eine weitere Sperrflüssigkeitsvorlage (5) angebracht ist.

## Claims

1. Apparatus for removing and precisely metering media of medium and high viscosity from drums and barrels having a follower plate (2) which is attached to the container (1) and on which a lifting device is arranged, in that there is attached to the follower plate (2) a pump housing (6) of a scoop piston pump whereof the scoop piston (9) which is provided with a hydraulic or pneumatic drive reaches into the container (1), and in that an inlet valve (11) is arranged laterally on the cylinder chamber (7) of the pump, characterized in that the inlet valve (11) is connected to a further cylinder chamber (8) which is provided with an outlet (17), in that the further cylinder chamber (8) is provided with conveying piston (15) as the metering chamber and forcibly controlled valves (11, 18) are arranged at the inlet (24) and the outlet (17), and in that a pressure measuring means is provided in the metering chamber (8) in order to obtain reproducible starting conditions.

2. Apparatus according to Claim 1, characterized in that the pressure sensor (19) is arranged in the vicinity of the outlet (17) in the metering chamber (8).

3. Apparatus according to Claim 1 and 2, characterized in that the conveying piston (15) is provided with a distance measuring system (23).

4. Apparatus according to Claim 1 to 3, characterized in that the conveying piston (15) is provided with sealing liquid receivers (20, 21).

5. Apparatus according to Claim 1 to 4, characterized in that a further sealing liquid receiver (5) is attached between the follower plate (2) and the container (1).

## Revendications

1. Dispositif pour prélever et doser précisément des substances moyennement et très visqueuses composées d'écheveaux et de fibres à l'aide d'une plaque d'avancement (2) fixée au récipient (1), sur laquelle est disposé un dispositif de levage, sachant qu'un carter de pompe (6) d'une pompe à épuisement à piston dont le piston d'épuisement (9) muni d'une commande hydraulique ou pneumatique pénètre dans le récipient (1) et qu'une soupape d'admission (11) est disposée sur le côté du cylindre (7) de la pompe, caractérisé en ce que la soupape d'admission (11) est reliée à un second cylindre (8) muni d'une sortie (17), en ce que le second cylindre (8) muni d'un piston d'alimentation (15) est prévu en tant que chambre de dosage, en ce qu'à l'entrée (24) ainsi qu'à la sortie (17) sont disposées des soupapes (11, 18) à commande forcée et en ce qu'un dispositif de mesure de la pression est prévu dans le cylindre (8) afin d'obtenir des conditions de départ reproductibles.

2. Dispositif selon la revendication 1, caractérisé en ce que l'absorbeur de pression (19) est disposé à proximité de la sortie (17) dans la chambre de dosage (8).

3. Dispositif selon la revendication 1 et 2, caractérisé en ce que le piston d'alimentation (15) est muni d'un système de mesure de la course (23).

4. Dispositif selon l'un des revendications 1 à 3, caractérisé en ce que le piston d'alimentation (15) est muni de collecteurs de liquide obturant (20,21).

5. Dispositif selon l'une des revendications 1 à 4, caractérisé en ce qu'un autre collecteur de liquide obturant (5) est placé entre la plaque d'avancement (2) et le récipient (1).
